# EUROPEAN PATENT APPLICATION

(11) **EP 4 434 725 A1**
(43) Date of publication of application: **25.09.2024**
(21) Application number: 22895458.2
(22) Date of filing: 04.11.2022
(51) Int. Cl.: B29C 55/02, B29C 48/08, B29C 48/88, B29C 55/04, B29C 55/14, C08J 5/18, B29K 67/00, B29L 7/00

(54) **STRETCHED FILM AND METHOD FOR PRODUCING SAME**

(30) Priority: 16.11.2021 JP 2021186515
(71) Applicant: Kaneka Corporation, Osaka-shi, Osaka 530-8288 (JP)
(72) Inventor: KAMIKARIYA, Naoya, Naoya Osaka 566-0072 (JP)
(74) Representative: Vossius & Partner Patentanwälte Rechtsanwälte mbB
(86) International application number: PCT/JP2022/041235
(87) International publication number: WO 2023/090176

(57) **Abstract**

A method for producing a stretched film includes the steps of: (i) melting a film raw material and extruding the molten film raw material onto a cast roll to mold a film; (ii) separating the film from the cast roll at a temperature of 0 to 60°C; and (iii-a) stretching the film in an MD direction at a temperature of 10 to 75°C, and the stretched film contains 100 parts by weight of a poly(3-hydroxybutyrate) resin and 1 to 100 parts by weight of another resin with a glass transition temperature lower than 0°C. The method may further include either or both of the steps of: (iii-b) stretching the film in a TD direction at a temperature of 10 to 80°C; and (iv) heating the film to a temperature that is 10°C or more above the temperature during the step (iii-a) or (iii-b) and that is 70°C or higher.

## Description

### Technical Field

The present invention relates to a stretched film containing a poly(3-hydroxybutyrate) resin and a method for producing the stretched film.

### Background Art

Separate collection and composting of raw garbage have recently been promoted especially in Europe, and there is a demand for plastic products that can be composted together with raw garbage.

Additionally, environmental problems caused by waste plastics have become an issue of great concern. In particular, it has been found that a huge amount of plastics dumped at seas or carried into seas through rivers are drifting in the ocean on a global scale. Such plastics, which retain their shapes for a long period of time, are pointed out as having various harmful effects on the ecosystems, and examples of plastics-induced problems include: a phenomenon called ghost fishing where plastics catch or trap marine creatures; and eating disorder from which marine creatures having ingested plastics suffer due to the plastics remaining in their digestive organs.

There is also known a problematic phenomenon where plastics are broken into microplastic particles by the action of ultraviolet rays or any other cause, then the microplastic particles adsorb hazardous compounds present in seawater, and marine creatures ingest the microplastic particles with the adsorbed compounds, so that hazardous substances are introduced into the food chain.

The use of biodegradable plastics is expected as means for addressing the plastics-induced marine pollution as described above. However, a report issued by the United Nations Environment Programme in 2015 states that plastics such as polylactic acid that can be biodegraded through composting are not expected to be degraded quickly in the actual ocean whose temperature is low and cannot therefore be used as a countermeasure against the marine pollution.

Under these circumstances, poly(3-hydroxybutyrate) resins, which can be biodegraded even in seawater, are attracting attention as materials that can be a solution to the above problems.

A known technique for producing a thin, high-strength film is film stretching. For example, in the case of producing a stretched film from a general-purpose resin such as polypropylene, a molten resin is cooled and solidified on a cast roll to form a web, then the web is preheated to a temperature at which the web can be stretched, and the preheated web is stretched. With this technique, the stretched film can be continuously produced with high productivity.

However, poly(3-hydroxybutyrate) resins are known as materials that are difficult to stretch due to their characteristics.

Patent Literature 1 is directed to achieving stretching of a poly(3-hydroxybutyrate) resin-containing film and describes a method for producing a stretched film. In this method, a thermoplastic resin material containing a poly(3-hydroxybutyrate) resin as a main component is melted and molded into a film, which is crystallized over a certain period of time. After that, the film is subjected to first stretching in which the film is rolled by pressing the film between two rolls. The film is further subjected to second stretching at a temperature higher than a temperature during the rolling, and thus the stretched film is produced.

Patent Literature 2 also describes a method for producing a stretched film. In this method, a molten film prepared using a poly(3-hydroxybutyrate) resin as a raw material is rapidly cooled to or below a temperature 10°C above the glass transition temperature of the resin and thus solidified to form an amorphous film. After that, the amorphous film is cold-stretched at a temperature (in particular, 3°C) equal to or lower than a temperature 20°C above the glass transition temperature and then heat-treated under tension at a temperature of 25 to 160°C (in particular, at 100°C for 2 hours) to produce the stretched film.

### Citation List

### Patent Literature

PTL 1: Japanese Laid-Open Patent Application Publication No. 2006-168159
PTL 2: Japanese Laid-Open Patent Application Publication No. 2003-311 824

### Summary of Invention

### Technical Problem

With the method of Patent Literature 1, a stretched film containing a poly(3-liydi-oxybutyrate) resin as a main component can be produced, and a high stretch ratio can be achieved. However, this method necessarily involves an annealing step in which the poly(3-hydroxybutyrate) resin is crystallized before stretching. The annealing step is described as requiring a long time of 12 hours. Disadvantageously, the need for such an annealing step precludes film production by a continuous process, resulting in low productivity.

Additionally, in order to achieve a high stretch ratio in one direction, the method of Patent Literature 1 requires a two-stage stretching step including first stretching performed by rolling and second stretching performed at a high temperature. Such a production process is disadvantageously complicated.

The use of the method of Patent Literature 2 also allows for a high stretch ratio of a stretched film containing a poly(3-hydroxybutyrate) resin as a main component. However, this literature states that the heat treatment under tension subsequent to stretching requires a long time of 2 hours. This literature fails to describe or suggest production of a stretched film by a continuous process and takes no account of productivity.

When the technique for continuously producing a stretched film from a general-purpose resin such as polypropylene is repurposed to produce a stretched film of poly(3-hydroxybutyrate) resin, the stretching is difficult, and the stretch ratio cannot be increased.

In view of the above circumstances, the present invention aims to provide a method for producing a stretched film containing a poly(3-hydroxybutyrate) resin at a high stretch ratio by a continuous process with high productivity.

### Solution to Problem

As a result of intensive studies with the goal of solving the problems described above, the present inventors have found that with the use of a technique in which cooling and solidification of a molten resin on a cast roll are followed by stretching, it is possible to produce a stretched film containing a poly(3-hydroxybutyrate) resin by a continuous process with high productivity and at the same time achieve a high stretch ratio, provided that the poly(3-hydroxybutyrate) resin is blended with another resin having given physical properties and that the film temperature in the step of separating the film from the cast roll and the film temperature in the step of stretching the separated film are controlled within given ranges. Based on this finding, the inventors have completed the present invention.

That is, the present invention relates to a method for producing a stretched film containing a poly(3-hydroxybutyrate) resin, the method including the steps of:
(i) melting a film raw material containing the poly(3-hydroxybutyrate) resin and another resin with a glass transition temperature lower than 0°C and extruding the molten film raw material onto a cast roll to mold a film;
(ii) separating the film molded in the step (i) from the cast roll under conditions where the film has a temperature of 0 to 60°C; and
(iii-a) stretching the film obtained in the step (ii) in an MD direction under conditions where the film has a temperature of 10 to 75°C, wherein
the stretched film contains 1 to 100 parts by weight of the other resin per 100 parts by weight of the poly(3-hydroxybutyrate) resin.

The present invention further relates to a stretched film containing:
100 parts by weight of a poly(3-hydroxybutyrate) resin; and
1 to 100 parts by weight of another resin with a glass transition temperature lower than 0°C,
the stretched film having a tensile strength at break of 50 MPa or more in an MD direction and/or a TD direction.

### Advantageous Effects of Invention

The present invention can provide a method for producing a stretched film containing a poly(3-hydroxybutyrate) resin at a high stretch ratio by a continuous process with high productivity.

According to the present invention, a uniaxially-stretched film stretched in an MD direction or a biaxially-stretched film stretched in both MD and TD directions can be produced, and a high stretch ratio can be achieved in both the MD and TD directions.

### Brief Description of Drawings

FIG. 1 is a conceptual diagram showing an example of a production line according to one embodiment of the present invention, in which production line the steps are performed that begin with film raw material extrusion followed by film molding and film stretching and that end with film winding; (A) is a top view and (B) is a side view.
FIG. 2 is a top view showing the shape of a test specimen used to measure the tensile strength at break of a stretched film in an example.

### Description of Embodiments

Hereinafter, an embodiment of the present invention will be described. The present invention is not limited to the embodiment described below.

The present embodiment relates to a method for producing a stretched film containing a poly(3-hydroxybutyrate) resin.

The poly(3-hydroxybutyrate) resin is an aliphatic polyester resin that can be produced from a microorganism and that contains 3-hydroxybutyrate as repeating units. The poly(3-hydroxybutyrate) resin may be poly(3-hydroxybutyrate) which contains only 3-hydroxybutyrate as repeating units or may be a copolymer of 3-hydroxybutyrate and another hydroxy alkanoate. The poly(3-hydroxybutyrate) resin may be a mixture of a homopolymer and one or more copolymers or may be a mixture of two or more copolymers.

Specific examples of the poly(3-hydroxybutyrate) resin include poly(3-hydroxybutyrate), poly(3-hydroxybutyrate-co-3-hydroxyhexanoate), poly(3-hydroxybutyrate-co-3-hydroxyvalerate), poly(3-hydroxybutyrate-co-4-hydroxybutyrate), poly(3-hydroxybutyrate-co-3-hydroxyoctanoate), and poly(3-hydroxybutyrate-co-3-hydroxyoctadecanoate). Among these, poly(3-hydroxybutyrate), poly(3-hydroxybutyrate-co-3-hydroxyhexanoate), poly(3-hydroxybutyrate-co-3-hydroxyvalerate), and poly(3-hydroxybutyrate-co-4-hydroxybutyrate) are preferred since they are easy to industrially produce.

Poly(3-hydroxybutyrate-co-3-hydroxyhexanoate) is more preferred for the following reasons: the ratio between the repeating units can be varied to change the melting point and crystallinity and thus adjust the physical properties such as Young's modulus and heat resistance to levels intermediate between those of polypropylene and polyethylene; and this plastic is easy to industrially produce and useful in terms of physical properties. Poly(3-hydroxybutyrate) resins are thermally decomposed easily by heating at 180°C or higher and, in particular, poly(3-hydroxybutyrate-co-3-hydroxyhexanoate) can have a low melting point and be moldable at low temperature. Poly(3-hydroxybutyrate-co-3-hydroxyhexanoate) is preferred also in this respect.

Examples of commercially-available poly(3-hydroxybutyrate-co-3-hydroxyhexanoate) include "Kaneka Biodegradable Polymer PHBH^{™}" of Kaneka Corporation.

The properties such as melting point and Young's modulus of poly(3-hydroxybutyrate-co-3-hydroxyvalerate) can be changed depending on the ratio between the 3-hydroxybutyrate component and the 3-hydroxyvalerate component. However, the crystallinity of poly(3-hydroxybutyrate-co-3-hydroxyvalerate) is as high as 50% or more because the two components are co-crystallized. Thus, poly(3-hydroxybutyrate-co-3-hydroxyvalerate), albeit being more flexible than poly(3-hydroxybutyrate), cannot offer sufficient improvement in terms of brittleness.

When the poly(3-hydroxybutyrate) resin includes a copolymer of 3-hydroxybutyrate units and other hydroxyalkanoate units, the average content ratio between the 3-hydroxybutyrate units and the other hydroxyalkanoate units (3-hydroxybutyrate units/other hydroxyalkanoate units) in total monomer units constituting the poly(3-hydroxybutyrate) resin is preferably from 99/1 to 80/20 (mol%/mol%) and more preferably from 97/3 to 85/15 (mol%/mol%) in terms of ensuring both the strength of the stretched film and the film productivity.

The average content ratio between different monomer units in total monomer units constituting the poly(3-hydroxybutyrate) resin can be determined by a method known to those skilled in the art, such as a method described in paragraph [0047] of WO 2013/147139. The "average content ratio" refers to a molar ratio between different monomer units in total monomer units constituting the poly(3-hydroxybutyrate) resin. When the poly(3-hydroxybutyrate) resin is a mixture of two or more poly(3-hydroxybutyrate) resins, the average content ratio refers to a molar ratio between different monomer units contained in the total mixture.

The poly(3-hydroxybutyrate) resin may be a mixture of at least two or more poly(3-hydroxybutyrate) resins differing in the types and/or contents of constituent monomers. In this case, at least one high-crystallinity poly(3-hydroxybutyrate) resin and at least one low-crystallinity poly(3-hydroxybutyrate) resin can be used in combination.

In general, high-crystallinity poly(3-hydroxybutyrate) resins are superior in terms of productivity but have low mechanical strength, while low-crystallinity poly(3-hydroxybutyrate) resins have good mechanical properties although being inferior in terms of productivity. When a high-crystallinity poly(3-hydroxybutyrate) resin and a low-crystallinity poly(3-hydroxybutyrate) resin are used in combination, it is expected that the high-crystallinity poly(3-hydroxybutyrate) resin forms fine resin crystal grains and the low-crystallinity poly(3-hydroxybutyrate) resin forms tie molecules that crosslink the resin crystal grains to one another. The combined use of these resins can improve the strength of the stretched film and the film productivity.

The content of 3-hydroxybutyrate units in the high-crystallinity poly(3-hydroxybutyrate) resin is preferably higher than the average content of 3-hydroxybutyrate units in total monomer units constituting the poly(3-hydroxybutyrate) resin mixture.

When the high-crystallinity poly(3-hydroxybutyrate) resin contains hydroxyalkanoate units other than 3-hydroxybutyrate units, the content of the other hydroxyalkanoate units in the high-crystallinity resin is preferably from 1 to 5 mol% and more preferably from 2 to 4 mol%.

The high-crystallinity poly(3-hydroxybutyrate) resin is preferably poly(3-hydroxybutyrate-co-3-hydroxyhexanoate) or poly(3-hydroxybutyrate-co-4-hydroxybutyrate) and more preferably poly(3 -hydroxybutyrate-co-3 -hydroxyhexanoate).

The content of 3-hydroxybutyrate units in the low-crystallinity poly(3-hydroxybutyrate) resin is preferably lower than the average content of 3-hydroxybutyrate units in total monomer units constituting the poly(3-hydroxybutyrate) resin mixture.

When the low-crystallinity poly(3-hydroxybutyrate) resin contains hydroxyalkanoate units other than 3-hydroxybutyrate units, the content of the other hydroxyalkanoate units in the low-crystallinity resin is preferably from 24 to 99 mol%, more preferably from 24 to 50 mol%, even more preferably from 24 to 35 mol%, and particularly preferably from 24 to 30 mol%.

The low-crystallinity poly(3-hydroxybutyrate) resin is preferably poly(3 -hydroxybutyrate-co-3 -hydroxyhexanoate) or poly(3-hydroxybutyrate-co-4-hydroxybutyrate) and more preferably poly(3-hydroxybutyrate-co-3-hydroxyhexanoate).

When the high-crystallinity poly(3-hydroxybutyrate) resin and the low-crystallinity poly(3-hydroxybutyrate) resin are used in combination, the proportion of each resin in the total amount of the two resins is not limited to a particular range. Preferably, the proportion of the high-crystallinity poly(3-hydroxybutyrate) resin is from 10 to 60 wt% and the proportion of the low-crystallinity poly(3-hydroxybutyrate) resin is from 40 to 90 wt%. More preferably, the proportion of the high-crystallinity poly(3-hydroxybutyrate) resin is from 25 to 45 wt% and the proportion of the low-crystallinity poly(3-hydroxybutyrate) resin is from 55 to 75 wt%.

In one embodiment, a middle-crystallinity poly(3-hydroxybutyrate) resin, the crystallinity of which is intermediate between those of the high-crystallinity poly(3-hydroxybutyrate) resin and the low-crystallinity poly(3-hydroxybutyrate) resin, can be further used in combination with the high-crystallinity and low-crystallinity poly(3-hydroxybutyrate) resins.

When the middle-crystallinity poly(3-hydroxybutyrate) resin contains hydroxyalkanoate units other than 3-hydroxybutyrate units, the content of the other hydroxyalkanoate units in the middle-crystallinity resin is preferably from 6 to less than 24 mol%, more preferably from 6 to 22 mol%, even more preferably from 6 to 20 mol%, and still even more preferably from 6 to 18 mol%.

The middle-crystallinity poly(3-hydroxybutyrate) resin is preferably poly(3-hydroxybutyrate-co-3 -hydroxyhexanoate) or poly(3-hydroxybutyrate-co-4-hydroxybutyrate) and more preferably poly(3-hydroxybutyrate-co-3-hydroxyhexanoate).

When the middle-crystallinity poly(3-hydroxybutyrate) resin is further used, the proportion of the middle-crystallinity poly(3-hydroxybutyrate) resin in the total amount of the high-crystallinity, low-crystallinity, and middle-crystallinity poly(3-hydroxybutyrate) resins is preferably from 1 to 99 wt%, more preferably from 5 to 90 wt%, and even more preferably from 8 to 85 wt%.

The method for obtaining a blend of two or more poly(3-hydroxybutyrate) resins is not limited to using a particular technique. A blend of two or more poly(3-hydroxybutyrate) resins may be obtained by microbial production or chemical synthesis. Alternatively, a blend of two or more resins may be obtained by melting and kneading the resins using a device such as an extruder, a kneader, a Banbury mixer, or a roll mill or may be obtained by dissolving and mixing the resins in a solvent and drying the resulting mixture.

The weight-average molecular weight of the poly(3-hydroxybutyrate) resin as a whole is not limited to a particular range. In terms of ensuring both the strength of the stretched film and the film productivity, the weight-average molecular weight is preferably from 20 × 10⁴ to 200 × 10⁴, more preferably from 25 × 10⁴ to 150 × 10⁴, and even more preferably from 30 × 10⁴ to 100 × 10⁴.

When the poly(3-hydroxybutyrate) resin is a mixture of two or more poly(3-hydroxybutyrate) resins, the weight-average molecular weight of each of the poly(3-hydroxybutyrate) resins constituting the mixture is not limited to a particular range. When the high-crystallinity and low-crystallinity poly(3-hydroxybutyrate) resins described above are used in combination, the weight-average molecular weight of the high-crystallinity poly(3-hydroxybutyrate) resin is preferably from 20 × 10⁴ to 100 × 10⁴, more preferably from 22 × 10⁴ to 80 × 10⁴, and even more preferably from 25 × 10⁴ to 60 × 10⁴ in terms of ensuring both the strength of the stretched film and the film productivity. The weight-average molecular weight of the low-crystallinity poly(3-hydroxybutyrate) resin is preferably from 20 × 10⁴ to 250 × 10⁴, more preferably from 25 × 10⁴ to 230 × 10⁴, and even more preferably from 30 × 10⁴ to 200 × 10⁴ in terms of ensuring both the strength of the stretched film and the film productivity. When the middle-crystallinity poly(3-hydroxybutyrate) resin described above is further used, the weight-average molecular weight of the middle-crystallinity poly(3-hydroxybutyrate) resin is preferably from 20 × 10⁴ to 250 × 10⁴, more preferably from 25 × 10⁴ to 230 × 10⁴, and even more preferably from 30 × 10⁴ to 200 × 10⁴ in terms of ensuring both the strength of the stretched film and the film productivity.

The weight-average molecular weight of the poly(3-hydroxybutyrate) resin can be measured as a polystyrene-equivalent molecular weight by gel permeation chromatography (HPLC GPC system manufactured by Shimadzu Corporation) using a chloroform solution of the resin. The column used in the gel penneation chromatography may be any column suitable for weight-average molecular weight measurement.

The method for producing the poly(3-hydroxybutyrate) resin is not limited to using a particular technique and may be a production method using chemical synthesis or a microbial production method. A microbial production method is preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) having a P3HA synthase gene introduced is more preferred. Such a microorganism is cultured under suitable conditions to allow the microorganism to accumulate P3HB3HH in its cells, and the microbial cells accumulating P3HB3HH are used. Instead of the above microorganism, a genetically modified microorganism having any suitable poly(3-hydroxybutyrate) resin synthesis-related gene introduced may be used depending on the poly(3-hydroxybutyrate) resin to be produced. The culture conditions including the type of the substrate may be optimized depending on the poly(3-hydroxybutyrate) resin to be produced.

The poly(3-hydroxybutyrate) resin may be an unmodified resin or may be a resin obtained by modifying an unmodified poly(3-hydroxybutyrate) resin with a resin-reactive material such as a peroxide (such a material will be hereinafter referred to as a "modifying material").

When a modified resin is used as a film raw material, a raw material prepared beforehand by a reaction of a resin and a modifying material may be molded into a film. Alternatively, a resin may be mixed with a modifying material and they may be reacted during film molding. When a resin and a modifying material are reacted, all of the resin may be reacted with the modifying material. Alternatively, part of the resin may be reacted with the modifying material to obtain a modified resin, and then the rest of the unmodified resin may be added to the modified resin.

The modifying material is not limited to a particular compound and may be any compound reactive with the poly(3-hydroxybutyrate) resin. In terms of handleability and ease of control of the reaction with the poly(3-hydroxybutyrate) resin, an organic peroxide can be preferably used.

Examples of the organic peroxide include diisobutyl peroxide, cumyl peroxyneodecanoate, di-*n*-propyl peroxydicarbonate, diisopropyl peroxydicarbonate, di-*sec*-butyl peroxydicarbonate, 1,1,3,3-tetramethylbutyl peroxyneodecanoate, bis(4-*t*-butylcycloliexyl) peroxydicarbonate, bis(2-ethylhexyl) peroxydicarbonate, *t*-hexyl peroxyneodecanoate, *t*-butyl peroxyneodecanoate, *t*-butyl peroxyneoheptanoate, *t*-hexyl peroxypivalate, *t*-butyl peroxypivalate, di(3,5,5-trimethylhexanoyl) peroxide, dilauroyl peroxide, 1,1,3,3-tetramethylbutyl peroxy-2-ethylhexanoate, disuccinic acid peroxide, 2,5-dimethyl-2,5-bis(2-ethylhexanoylperoxy)bexane, *t*-hexyl peroxy-2-ethylhexanoate, di(4-niethylbenzoyl) peroxide, dibenzoyl peroxide, *t*-butyl peroxy-2-ethylhexylcarbonate, *t*-butyl peroxyisopropylcarbonate, 1,6-bis(*t*-butylperoxycarbonyloxy)hexane, *t*-butyl peroxy-3,5,5-trimethylhexanoate, *t*-butyl peroxyacetate, *t*-butyl peroxybenzoate, *t*-amyl peroxy-3,5,5-trimethylhexanoate, 2,2-bis(4,4-di-*t*-butylperoxycycloliexyl)propane, and 2,2-di-*t*-butylperoxybutane. Among these, *t*-butyl peroxy-2-ethylhexylcarbonate and *t*-butyl peroxyisopropylcarbonate are preferred. Two or more of the above organic peroxides may be used in combination.

The organic peroxide used may be in any form such as a solid or liquid and may be a liquid diluted with a diluent or the like. An organic peroxide easily miscible with the poly(3-hydroxybutyrate) resin (in particular, an organic peroxide that is liquid at room temperature (25°C)) is preferred because such an organic peroxide can be uniformly dispersed in the poly(3-hydroxybutyrate) resin to prevent a local modification reaction in the resin composition.

### (Another Resin)

The film raw material or the stretched film contains, in addition to the poly(3-hydroxybutyrate) resin, another resin with a glass transition temperature lower than 0°C. By using the other resin having a lower glass transition temperature than the poly(3-hydroxybutyrate) resin in combination with the poly(3-hydroxybutyrate) resin, the film crystallinity can be controlled to a relatively low level in steps (ii), (iii-a), and (iii-b) described later, and the poly(3-hydroxybutyrate) resin-containing film can be stretched at a high stretch ratio.

The glass transition temperature of the other resin may be any temperature lower than 0°C and is preferably -10°C or lower and more preferably -20°C or lower.

The other resin with a glass transition temperature lower than 0°C is not limited to a particular type. An aliphatic polyester resin and/or an aliphatic-aromatic polyester resin is preferred in terms of biodegradability, achievable stretch ratio, and compatibility with the poly(3-hydroxybutyrate) resin. More specific examples of the other resin include polybutylene succinate adipate, polybutylene succinate, polycaprolactone, polybutylene adipate terephthalate, polybutylene sebacate terephthalate, and polybutylene azelate terephthalate. One of these resins may be used alone, or two or more thereof may be used in combination.

The amount of the other resin with a glass transition temperature lower than 0°C is from 1 to 100 parts by weight per 100 parts by weight of the poly(3-hydroxybutyrate) resin. The amount of the other resin is preferably from 3 to 80 parts by weight and more preferably from 5 to 60 parts by weight.

The film raw material or the stretched film may further contain a resin with a glass transition temperature of 0°C or higher. Such another resin is not limited to a particular type and is, for example, polylactic acid.

The amount of the resin with a glass transition temperature of 0°C or higher is not limited to a particular range, but is preferably 1 00 parts by weight or less, more preferably 50 parts by weight or less, even more preferably 30 parts by weight or less, still even more preferably 10 parts by weight or less, and particularly preferably 5 parts by weight or less per 100 parts by weight of the poly(3-hydroxybutyrate) resin. The lower limit of the amount of the resin with a glass transition temperature of 0°C or higher is not limited to a particular value, and the amount of this resin may be 0 part by weight or more.

The film raw material or the stretched film may contain an additive usable with the poly(3-hydroxybutyrate) resin to the extent that the additive does not diminish the effect of the invention. Examples of the additive include: a colorant such as a pigment or dye; an odor absorber such as activated carbon or zeolite; a flavor such as vanillin or dextrin; and other additives such as a filler, a plasticizer, an oxidation inhibitor, an antioxidant, a weathering resistance improver, an ultraviolet absorber, a nucleating agent, a lubricant, a mold release, a water repellent, an antimicrobial, and a slidability improver. Only one additive may be contained, or two or more additives may be contained. The amounts of these additives can be set by those skilled in the art as appropriate depending on the intended purpose.

The following describes the nucleating agent, lubricant, filler, and plasticizer in detail.

### (Nucleating Agent)

The film raw material or the stretched film may contain a nucleating agent. Examples of the nucleating agent include: polyhydric alcohols such as pentaerythritol, galactitol, and mannitol; and other compounds such as orotic acid, aspartame, cyanuric acid, glycine, zinc phenylphosphonate, and boron nitride. Among these, pentaerythritol is preferred because it is particularly superior in the accelerating effect on crystallization of the poly(3-hydroxybutyrate) resin. One nucleating agent may be used, or two or more nucleating agents may be used. The proportions of the nucleating agents used can be adjusted as appropriate depending on the intended purpose.

The amount of the nucleating agent used is not limited to a particular range, but is preferably from 0.1 to 5 parts by weight, more preferably from 0.5 to 3 parts by weight, and even more preferably from 0.7 to 1.5 parts by weight per 100 parts by weight of the total amount of the poly(3-hydroxybutyrate) resin and the other resin.

### (Lubricant)

The film raw material or the stretched film may contain a lubricant. Examples of the lubricant include behenamide, oleamide, erucamide, stearamide, palmitamide, *N*-stearyl behenamide, *N*-stearyl erucamide, ethylenebisstearamide, ethylenebisoleamide, ethylenebiserucamide, ethylenebislauramide, ethylenebiscapramide, *p*-phenylenebisstearamide, and a polycondensation product of ethylenediamine, stearic acid, and sebacic acid. Among these, behenamide and erucamide are preferred because they are particularly superior in the lubricating effect on the poly(3-hydroxybutyrate) resin. One lubricant may be used, or two or more lubricants may be used. The proportions of the lubricants used can be adjusted as appropriate depending on the intended purpose.

The amount of the lubricant used is not limited to a particular range, but is preferably from 0.01 to 5 parts by weight, more preferably from 0.05 to 3 parts by weight, and even more preferably from 0.1 to 1.5 parts by weight per 100 parts by weight of the total amount of the poly(3-hydroxybutyrate) resin and the other resin.

### (Filler)

The film raw material or the stretched film may contain a filler. The addition of a filler can further enhance the strength of the stretched film. The filler may be an inorganic filler or an organic filler, and inorganic and organic fillers may be used in combination. Examples of inorganic fillers include, but are not limited to, silicate salts, carbonate salts, sulfate salts, phosphate salts, oxides, hydroxides, nitrides, and carbon black. One inorganic filler may be used alone, or two or more inorganic fillers may be used in combination.

The amount of the filler is not limited to a particular range, but is preferably from 1 to 100 parts by weight, more preferably from 3 to 80 parts by weight, even more preferably from 5 to 70 parts by weight, and still even more preferably from 10 to 60 parts by weight per 100 parts by weight of the total amount of the poly(3-hydroxybutyrate) resin and the other resin. The film raw material or the stretched film need not contain any filler.

### (Plasticizer)

The film raw material or the stretched film may contain a plasticizer. Examples of the plasticizer include glycerin ester compounds, citric ester compounds, sebacic ester compounds, adipic ester compounds, polyether ester compounds, benzoic ester compounds, phthalic ester compounds, isosorbide ester compounds, polycaprolactone compounds, and dibasic ester compounds. Among these, glycerin ester compounds, citric ester compounds, sebacic ester compounds, and dibasic ester compounds are preferred because they are particularly superior in the plasticizing effect on the poly(3-hydroxybutyrate) resin. Examples of the glycerin ester compounds include glycerin diacetomonolaurate. Examples of the citric ester compounds include tributyl acetylcitrate. Examples of the sebacic ester compounds include dibutyl sebacate. Examples of the dibasic ester compounds include benzyl methyl diethylene glycol adipate. One plasticizer may be used, or two or more plasticizers may be used. The proportions of the plasticizers used can be adjusted as appropriate depending on the intended purpose.

The amount of the plasticizer used is not limited to a particular range, but is preferably from 1 to 20 parts by weight, more preferably from 2 to 15 parts by weight, and even more preferably from 3 to 10 parts by weight per 100 parts by weight of the total amount of the poly(3-hydroxybutyrate) resin and the other resin. The film raw material or the stretched film need not contain any plasticizer.

Next, a stretched film production method according to the present embodiment will be described.

The stretched film production method according to the present embodiment includes at least the steps of:
(i) melting a film raw material containing the poly(3-hydroxybutyrate) resin and the other resin and extruding the molten film raw material onto a cast roll to mold a film;
(ii) separating the film molded in the step (i) from the cast roll under conditions where the film has a temperature of 0 to 60°C; and
(iii-a) stretching the film obtained in the step (ii) in an MD direction under conditions where the film has a temperature of 10 to 75°C.

A uniaxially-stretched film stretched in the MD direction can be obtained through the steps (i), (ii), and (iii-a).

The MD direction is also called a machine direction, flow direction, or length direction. A TD direction mentioned below is a direction transverse to the MD direction and also called a transverse direction or width direction.

The step (iii-a) is preferably followed by the step of:
(iv) heating the film obtained in the step (iii-a) to a temperature that is 10°C or more above the temperature of the film during the step (iii-a) and that is 70°C or higher.

A uniaxially-stretched film stretched in the MD direction and having high strength in the MD direction can be obtained through the steps (i), (ii), (iii-a), and (iv).

The step (iii-a) may be followed by the step of:
(iii-b) stretching the film obtained in the step (iii-a) in a TD direction under conditions where the film has a temperature of 10 to 80°C.

A biaxially-stretched film stretched in both the MD and TD directions can be obtained through the steps (i), (ii), (iii-a), and (iii-b).

The step (iii-b) is preferably followed by the step of:
(iv) heating the film obtained in the step (iii-b) to a temperature that is 10°C or more above the temperature of the film during the step (iii-b) and that is 70°C or higher.

A biaxially-stretched film stretched in both the MD and TD directions and having high strength in both the MD and TD directions can be obtained through the steps (i), (ii), (iii-a), (iii-b), and (iv).

The step (iv) need not be performed. The crystallinity of a stretched film obtained without performing the step (iv) can be increased by leaving the stretched film at, for example, room temperature for a long period of time, and thus high strength can be imparted to the stretched film. However, the leaving the stretched film could cause shrinkage of the stretched film; thus, the film strength is preferably enhanced by performing the step (iv).

The following describes each of the steps.

### (Step (i))

In the step (i), first, the film raw material containing the poly(3-hydroxybutyrate) resin and the other resin is melted. The melting method is not limited to using a particular technique. Preferably, the melting is accomplished by a method including extruding the molten film raw material from a T-die, namely, by extrusion molding. With the use of extrusion molding, a film uniform in thickness can easily be produced. In extrusion molding, a single-screw extruder, a twin-screw extruder, or the like can be used as appropriate.

The conditions for melting of the film raw material may be any conditions under which the poly(3-hydroxybutyrate) resin and the other resin are melted. The temperature of the molten film raw material may be, for example, from about 140 to about 210°C.

Subsequently, the molten film raw material is extruded onto a cast roll to mold a film. The melt of the film raw material comes into contact with the cast roll and is cooled while moving along the surface of the cast roll. Thus, part of the resins contained in the film raw material is crystallized.

This step may be a step in which the melt is extruded onto one cast roll or a plurality of cast rolls or may be a step in which a touch roll is placed facing the cast roll and in which the melt extruded onto the cast roll is pressed between the touch roll and the cast roll. This step is not a step in which a film is rolled under pressure.

An air knife or an air chamber may be used to ensure stable contact of the melt with the cast roll. The cast roll may be placed in a water bath, or an air chamber may be used, to efficiently cool the side of the melt opposite from the side in contact with the cast roll.

The set temperature of the cast roll is preferably 60°C or lower to control the film temperature in the step (ii) described later. The set temperature is more preferably 50°C or lower and even more preferably 40°C or lower.

However, if the set temperature of the cast roll is extremely low, the poly(3-hydroxybutyrate) resin tends to be insufficiently solidified, stick to the cast roll, and become difficult to separate from the cast roll. Thus, the set temperature of the cast roll is preferably 0°C or higher, more preferably 5°C or higher, even more preferably 10°C or higher, still even more preferably 12°C or higher, and particularly preferably 15°C or higher. The lower limit of the set temperature of the cast roll may be higher than a temperature 10°C above the glass transition temperature (Tg) of the poly(3-hydroxybutyrate) resin, may be equal to or higher than a temperature 12°C above the Tg, or may be equal to or higher than a temperature 14°C above the Tg.

### (Step (ii))

In the step (ii), the film molded in the step (i) is separated from the cast roll under conditions where the film has a temperature of 0 to 60°C. The film separation from the cast roll can be accomplished by transferring the film toward the subsequent stretching step while rotating the cast roll.

The film temperature in the step (ii) is controlled to 60°C or lower. This allows for control of the film crystallinity to a relatively low level in the subsequent step (iii-a), thus making it possible to stretch the poly(3-hydroxybutyrate) resin-containing film at a high stretch ratio. The film temperature is preferably 50°C or lower, more preferably 45°C or lower, even more preferably 40°C or lower, and particularly preferably 35°C or lower.

To facilitate the film separation from the cast roll, the film temperature in the step (ii) is 0°C or higher. The film temperature is preferably 5°C or higher, more preferably 10°C or higher, even more preferably 12°C or higher, and particularly preferably 15°C or higher. The lower limit of the film temperature in the step (ii) may be higher than a temperature 10°C above the glass transition temperature (Tg) of the poly(3-hydroxybutyrate) resin, may be equal to or higher than a temperature 12°C above the Tg, or may be equal to or higher than a temperature 14°C above the Tg.

The film temperature in the step (ii) depends primarily on the temperature of the film raw material melted in the step (i) and the above-described set temperature of the cast roll. The film temperature in the step (ii) is also influenced by the temperature of the atmosphere around the cast roll and the time of contact between the cast roll and the film. By taking into account these parameters, those skilled in the art can easily control the film temperature.

### (Step (iii-a))

in the step (iii-a), the film obtained in the step (ii) is stretched in the MD direction under conditions where the film has a temperature of 10 to 75°C. The step (iii-a) is preferably performed in series with the step (ii) in one and the same production line.

In the step (iii-a), the film is preferably stretched by elongating the film in the MD direction. The phrase "elongating the film in the MD direction" as used herein means pulling the film in the MD direction, and such elongation should be distinguished from a stretching operation performed by applying pressure in the film thickness direction, such as rolling in which the film is pressed between two rolls.

The elongation in the MD direction is not limited to using a particular technique and can be performed, for example, by using a roll longitudinal stretching machine including a plurality of rolls on which the film is transferred and by operating the plurality of rolls at different rotational speeds. The stretch ratio in the MD direction can be determined by the ratio between the roll rotational speed before stretching and the roll rotational speed after stretching.

In conventional production of a stretched film from a general-purpose resin such as polypropylene, it is usually the case that cooling and solidification of a molten resin are followed by preheating to a high temperature such as 145°C to increase the film crystallinity and then by stretching of the film with increased crystallinity. In contrast, in the present embodiment, film stretching is performed at a temperature of 75°C or lower to control the film crystallinity within a relatively low crystallinity range. In this respect, the present embodiment is clearly different from production of a stretched film from a general-purpose resin such as polypropylene.

The film temperature in the step (iii-a) is controlled to 75°C or lower. This retards resin crystallization during the step (iii-a) and leads to the film containing a relatively large proportion of amorphous region, thus making it possible to orient crystal molecules in the amorphous region and achieve a high stretch ratio. Additionally, in the case where the step (iii-b) is subsequently performed, the film crystallinity can be controlled to a relatively low level also in the step (iii-b), and this allows for stretching at a high ratio in the TD direction. If the film temperature exceeds 75°C in the step (iii-a), the film becomes brittle and likely to be broken when stretched, and it becomes difficult to achieve a high stretch ratio. The film temperature is preferably 65°C or lower, more preferably 55°C or lower, even more preferably 45°C or lower, and particularly preferably 35°C or lower.

To facilitate film separation from devices such as rolls which are used in the stretching step, the film temperature in the step (iii-a) is 10°C or higher. Preferably, the film temperature in the step (iii-a) is 15°C or higher.

The film temperature in the step (iii-a) is preferably equal to or higher than the film temperature in the step (ii).

The film temperature in the step (iii-a) depends primarily on the film temperature in the previous step (ii), the temperature condition in the step (iii-a), and the time required for the step (iii-a). By taking into account these parameters, those skilled in the art can easily control the film temperature.

Control of the film temperature in the step (iii-a) is not limited to using particular means, and examples of control techniques include: a technique in which an air stream adjusted to a given temperature is applied to the film; a technique in which the film temperature is controlled by setting rolls to a given temperature; a technique in which the film temperature is controlled to a given temperature by heating the film using auxiliary heating means such as an IR heater; and a technique in which the film is passed through an oven adjusted to a given temperature. One of these techniques may be used alone, or two or more thereof may be used in combination.

The stretch ratio in the step (iii-a) is not limited to a particular range, but is preferably 2 or more. The stretch ratio is more preferably 2.5 or more and even more preferably 3 or more. In the present embodiment, such a high stretch ratio can be achieved by controlling the film temperature in the steps (ii) and (iii-a). The upper limit of the stretch ratio is not limited to a particular value and may be chosen as appropriate. For example, the stretch ratio may be 8 or less.

### (Step (iii-b))

In the step (iii-b), the stretched film obtained in the step (iii-a) is stretched in the TD direction under conditions where the film has a temperature of 10 to 80°C. The step (iii-b) is preferably performed in series with the step (iii-a) in one and the same production line.

In the step (iii-b), the film is preferably stretched by elongating the film in the TD direction. As with the above-described elongation in the MD direction, the phrase "elongating the film in the TD direction" means pulling the film in the TD direction, and such elongation should be distinguished from a stretching operation performed by applying pressure in the film thickness direction, such as rolling in which the film is pressed between two rolls.

The elongation in the TD direction is not limited to using a particular technique and can be performed, for example, by using a transverse stretching machine such as a clip tenter to clamp the film at both width ends and pull the clamped film in the TD direction. The stretch ratio in the TD direction can be determined by the ratio between the width of the clamped film before stretching and the width of the clamped film after stretching.

The film temperature in the step (iii-b) is controlled to 80°C or lower. This retards resin crystallization during the step (iii-b) and leads to the film containing a relatively large proportion of amorphous region, thus making it possible to orient crystal molecules in the amorphous region and achieve a high stretch ratio. If the film temperature exceeds 80°C in this step, the film becomes brittle and likely to be broken when stretched, and it becomes difficult to achieve a high stretch ratio. The film temperature is preferably 70°C or lower, more preferably 60°C or lower, even more preferably 50°C or lower, still even more preferably 40°C or lower, and particularly preferably 35°C or lower.

To facilitate film separation from devices such as rolls which are used in the stretching step, the film temperature in the step (iii-b) is 10°C or higher. The film temperature in the step (iii-b) is preferably 15°C or higher and more preferably 20°C or higher.

The film temperature in the step (iii-b) is preferably equal to or higher than the film temperature in the step (iii-a).

The film temperature in the step (iii-b) depends primarily on the film temperature in the previous step (iii-a), the temperature condition in the step (iii-b), and the time required for the step (iii-b). By taking into account these parameters, those skilled in the art can easily control the film temperature.

Control of the film temperature in the step (iii-b) is not limited to using particular means, and any of the techniques mentioned above for the step (iii-a) can be used as appropriate. One of the mentioned techniques may be used alone, or two or more thereof may be used in combination.

The stretch ratio in the step (iii-b) is not limited to a particular range, but is preferably 2 or more. The stretch ratio is more preferably 3 or more and even more preferably 4 or more. In the present embodiment, such a high stretch ratio can be achieved by controlling the film temperature in the steps (ii), (iii-a), and (iii-b). The upper limit of the stretch ratio is not limited to a particular value and may be chosen as appropriate. For example, the stretch ratio may be 8 or less.

### (Step (iv))

In the step (iv), the film obtained in the step (iii-a) or the film obtained in the step (iii-b) is heated to a temperature that is 10°C or more above the temperature of the film during the step (iii-a) or (iii-b) and that is 70°C or higher. The step (iv) is preferably performed in series with the step (iii-a) or (iii-b) in one and the same production line.

The step (iv) can increase the film crystallinity controlled to a relatively low level in the step (iii-a) or step (iii-b) and can thus enhance the strength of the stretched film. Additionally, the physical properties of the stretched film can be stabilized.

In terms of increasing the film crystallinity kept down in the previous steps, the film temperature in the step (iv) is 10°C or more above the film temperature in the step (iii-a) or (iii-b). The film temperature in the step (iv) is preferably 20°C or more above, more preferably 30°C or more above, even more preferably 40°C or more above, and particularly preferably 50°C or more above, the film temperature in the step (iii-a) or (iii-b).

In terms of sufficiently accelerating resin crystallization in the step (iv), the film temperature in the step (iv) is 70°C or higher. The film temperature in the step (iv) is preferably 80°C or higher and more preferably 85°C or higher. The upper limit of the film temperature in the step (iv) may be any temperature equal to or lower than the melting temperatures of the poly(3-hydroxybutyrate) resin and the other resin. The film temperature in the step (iv) is preferably 150°C or lower, more preferably 145°C or lower, and even more preferably 140°C or lower.

Control of the film temperature in the step (iv) is not limited to using particular means, and any of the techniques mentioned above for the step (iii-a) can be used as appropriate. One of the mentioned techniques may be used alone, or two or more thereof may be used in combination.

The step (iv) is preferably performed with tension applied to the film in the direction in which the film has been stretched. This makes it possible to avoid heat shrinkage of the film. Specifically, when the step (iv) follows the step (iii-a), the step (iv) is preferably performed with tension applied to the film in the MD direction. When the step (iv) follows the step (iii-b), the step (iv) is preferably performed with tension applied to the film in both the MD and TD directions. The application of tension in the MD direction may be done, for example, by controlling respective rotational speeds of a plurality of rolls on which the film is transferred. The application of tension in the TD direction may be done, for example, by performing the step (iv) while clamping the film at both width ends and pulling the clamped film in the TD direction by means of a transverse stretching machine.

It should be noted that the step (iv) does not include substantial stretching of the film. The phrase "not include substantial stretching of the film" means that in the step (iv) any operation intended to stretch the film is not performed.

In the stretched film production method according to the present embodiment, the steps from melting and extrusion of the film raw material to formation of the stretched film can be performed by a continuous process. The term "continuous process" as used herein refers to a process in which molding of a raw material into a film is followed by a stretching step without any time-consuming crystallization step as described in Patent Literature 1 (specifically, the step of rapidly cooling the film in ice water and then annealing the film at 40°C for 12 hours).

In the stretched film production method according to the present embodiment, it is preferable to continuously transfer the film throughout the steps from the step (i) to a final step. In this case, a stretched film can be produced by an industrially simple process with high productivity. This way of production may be performed along with winding of the produced stretched film on a winding roll. The "final step" refers to the step (iii-a) when the method ends with the step (iii-a), refers to the step (iii-b) when the method ends with the step (iii-b), and refers to the step (iv) when the method ends with the step (iv).

When the film is continuously transferred, the transfer speed is not limited to a particular range. In terms of film productivity, the transfer speed is preferably 5 m/min or more before start of stretching. In terms of production stability, the transfer speed is preferably 50 m/min or less before start of stretching.

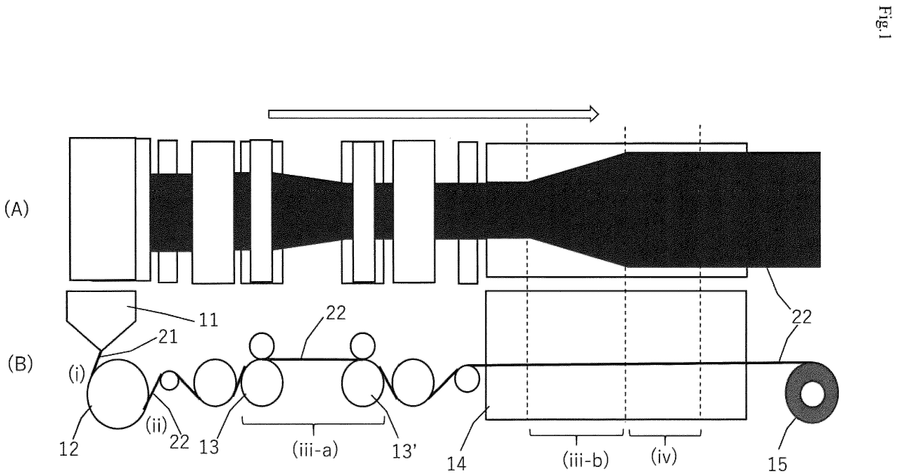

FIG. 1 shows an example of a production line in which the steps (i) to (iv) are performed and in which the film is continuously transferred throughout the steps (i) to (iv). The rightward arrow in the figure represents a film transfer direction.

First, the film raw material containing the poly(3-hydroxybutyrate) resin and the other resin is melted in an extruder 11. A molten film raw material 21 is extruded onto a cast roll 12 from a T-die coupled to the forward end of the extruder and is molded into a film on the surface of the roll (step (i)).

The molten film raw material is cooled while moving along the surface of the cast roll 12. During this cooling, part of the resins contained in the film raw material crystallizes. A solidified film 22 is separated from the cast roll 12 in line with the film transfer path (step (ii)).

After that, the film 22 is guided to stretching rolls 13 and 13' arranged one behind the other in the film transfer direction. The subsequent roll 13' is set to operate at a higher rotational speed than the preceding roll 13. Due to this rotational speed difference, the film 22 is pulled in the MD direction and thus stretched in the MD direction (step (iii-a)). The film temperature during stretching in the MD direction is controlled by setting the roll 13 to a given temperature by means of a heat medium.

The film 22 stretched in the MD direction is guided into a transverse stretching machine 14 which is a clip tenter. In the transverse stretching machine, the film is clamped at both width ends and is pulled in the TD direction; thus, the film is stretched in the TD direction (step (iii-b)). An air stream adjusted to a given temperature is applied to the film in the transverse stretching machine to control the film temperature during stretching in the TD direction.

After a desired stretch ratio in the TD direction is achieved, the internal temperature of the transverse stretching machine 14 is increased while the film remains clamped at both width ends. Thus, the film is heated to allow resin crystallization to proceed (step (iv)).

After that, the film 22 is wound on a winding roll 15. In this manner, a high-strength biaxially-stretched film stretched in both the MD and TD directions can be obtained. In the process described above, the film is continuously transferred throughout the steps that begin with film raw material extrusion, followed by film molding and film stretching, and that end with film winding.

### (Stretched Film)

A stretched film that can be produced in the present embodiment contains 100 parts by weight of a poly(3-hydroxybutyrate) resin and 1 to 100 parts by weight of another resin with a glass transition temperature lower than 0°C and exhibits a high tensile strength at break in a direction in which the film has been stretched. The tensile strength at break is not limited to a particular range and can be 50 MPa or more in the MD direction and/or the TD direction. The tensile strength at break is preferably 60 MPa or more and more preferably 70 MPa or more. The upper limit of the tensile strength at break is not limited to a particular value, and the tensile strength at break may be 300 MPa or less or may be 200 MPa or less. The tensile strength at break can be measured as described in Examples.

The stretched film is preferably in the shape of a long strip so that the film may be produced while being continuously transferred. In this case, the stretched film is preferably wound in a roll so that the film may be easy to handle. The stretched film wound in a roll may be one wound around a rod-shaped member.

The ratio of the length of the stretched film to the width of the stretched film (length/width ratio) is not limited to a particular range and may be, for example, 10 or more. The ratio may be 50 or more or may be 100 or more. The upper limit of the ratio is not limited to a particular value, and the ratio may be, for example, 1 × 10⁴ or less. The ratio may be 5 × 10³ or less or may be 3 × 10³ or less.

The length of the stretched film is not limited to a particular range and may be, for example, 1 m or more. The length may be 5 in or more or may be 10 m or more. The upper limit of the length is not limited to a particular value, and the length may be, for example, 1000 m or less. The length may be 500 m or less, may be 300 m or less, or may be 100 in or less.

The width of the stretched film is not limited to a particular range and may be, for example, 10 mm or more. The width may be 50 mm or more, may be 100 mm or more, or may be 200 mm or more. The upper limit of the width is not limited to a particular value, and the width may be, for example, 2000 mm or less. The width may be 1000 mm or less or may be 500 mm or less.

The thickness of the stretched film is not limited to a particular range and can be set as appropriate by those skilled in the art. In terms of uniformity in thickness, visual appearance, strength, and low weight of the film, the thickness of the film is preferably from 10 to 200 µm, more preferably from 15 to 150 µm, and even more preferably from 20 to 100 µm.

Another layer may be formed on the stretched film. Examples of the other layer include a resin layer, an inorganic material layer, a metal layer, a metal oxide layer, and a printed layer. The other layer may be a lamination layer, a coating layer, or a vapor-deposited layer.

The stretched film has high strength even when it is thin. Thus, the stretched film is suitable for use as a packaging film, a heat-sealable film, a twist film, or the like.

In the following items, preferred aspects of the present disclosure are listed. The present invention is not limited to the following items.

### [Item 1]

A method for producing a stretched film containing a poly(3-hydroxybutyrate) resin, the method including the steps of:
(i) melting a film raw material containing the poly(3-hydroxybutyrate) resin and another resin with a glass transition temperature lower than 0°C and extruding the molten film raw material onto a cast roll to mold a film;
(ii) separating the film molded in the step (i) from the cast roll under conditions where the film has a temperature of 0 to 60°C; and
(iii-a) stretching the film obtained in the step (ii) in an MD direction under conditions where the film has a temperature of 10 to 75°C, wherein
the stretched film contains 1 to 100 parts by weight of the other resin per 100 parts by weight of the poly(3-hydroxybutyrate) resin.

### [Item 2]

The method according to item 1, further including the step of:
(iii-b) stretching the film obtained in the step (iii-a) in a TD direction under conditions where the film has a temperature of 10 to 80°C.

### [Item 3]

The method according to item 1 or 2, further including the step of:
(iv) heating the film obtained in the step (iii-a) or (iii-b) to a temperature that is 10°C or more above the temperature of the film during the step (iii-a) or (iii-b) and that is 70°C or higher.

### [Item 4]

The method according to any one of items 1 to 3, wherein the film molded in the step (i) has a temperature that is more than 10°C above a glass transition temperature of the poly(3-hydroxybutyrate) resin.

### [Item 5]

The method according to any one of items 1 to 4, wherein a stretch ratio in the step (iii-a) and/or the step (iii-b) is from 2 to 8.

### [Item 6]

The method according to any one of items 1 to 5, wherein the film is continuously transferred throughout the steps from the step (i) to a final step.

### [Item 7]

The method according to any one of items 1 to 6, wherein in the step (iii-a), the stretching in the MD direction is performed by using a plurality of rolls on which the film is transferred and by operating the plurality of rolls at different rotational speeds.

### [Item 8]

The method according to any one of items 1 to 7, wherein the poly(3-hydroxybutyrate) resin includes poly(3-hydroxybutyrate-co-3-hydroxyhexanoate).

### [Item 9]

The method according to any one of items 1 to 8, wherein the other resin includes an aliphatic polyester resin and/or an aliphatic-aromatic polyester resin.

### [Item 10]

The method according to item 9, wherein the other resin includes at least one selected from the group consisting of polybutylene succinate adipate, polybutylene succinate, polycaprolactone, polybutylene adipate terephthalate, polybutylene sebacate terephthalate, and polybutylene azelate terephthalate.

### [Item 11]

A stretched film containing:
100 parts by weight of a poly(3-hydroxybutyrate) resin; and
1 to 100 parts by weight of another resin with a glass transition temperature lower than 0°C,
the stretched film having a tensile strength at break of 50 MPa or more in an MD direction and/or a TD direction.

### [Item 12]

The stretched film according to item 11, having a thickness of 10 to 200 µm.

### [Item 13]

The stretched film according to item 11 or 12, wherein the poly(3-hydroxybutyrate) resin includes poly(3-hydroxybutyrate-co-3-hydroxyhexanoate).

### [Item 14]

The stretched film according to any one of items 11 to 13, wherein the other resin includes an aliphatic polyester resin and/or an aliphatic-aromatic polyester resin.

### [Item 15]

The stretched film according to item 14, wherein the other resin includes at least one selected from the group consisting of polybutylene succinate adipate, polybutylene succinate, polycaprolactone, polybutylene adipate terephthalate, polybutylene sebacate terephthalate, and polybutylene azelate terephthalate.

### [Item 16]

The stretched film according to any one of items 11 to 15, being a strip-shaped film wound in a roll.

### Examples

Hereinafter, the present invention will be described more specifically using Examples and Comparative Examples. The present invention is not limited by Examples in any respect.

The following raw materials were used in Examples and Comparative Examples.

### (Poly(3-hydroxybutyrate) Resin)

A-1: P3HB3HH (average content ratio 3HB/3HH = 94/6 (mol%/mol%), weight-average molecular weight = 60 × 10⁴ g/mol, glass transition temperature = 6°C) produced according to a method described in Example 1 of WO 2019/142845.

### (Polybutylene Adipate Terephthalate)

B-1: Ecoflex C1200 (manufactured by BASF) having a glass transition temperature of -38°C.

### (Evaluation of Film Thickness)

The thickness of the film was measured using a caliper at 10 points spaced at intervals of 10 cm in the TD direction. An arithmetic mean of the 10 thickness values was calculated as the film thickness.

### (Method for Measuring Glass Transition Temperature)

The glass transition temperature (Tg) of each resin was determined by differential scanning calorimetry according to JIS K-7121.

Specifically, first, about 5 mg of the resin as a measurement object was weighed out and subjected to differential scanning calorimetry which used a differential scanning calorimeter (SSC 5200 manufactured by Seiko Instruments & Electronics Ltd.) and in which the resin was heated from -20°C to 200°C at a temperature increase rate of 10°C/min, and thus a DSC curve was obtained. Subsequently, in the obtained DSC curve, which had a portion showing a stepwise baseline shift arising from glass transition, straight extensions of the pre-shift baseline and the post-shift baseline were drawn, and a center line equidistant from the two straight extensions in the direction of the ordinate axis was drawn. The temperature at the point where the center line intersected the glass transition-induced stepwise shift portion of the DSC curve was determined as the glass transition temperature (Tg).

### (Method for Measuring Crystallinity)

The film as freshly separated from the cast roll, the film as freshly stretched in the MD direction, the film as freshly stretched in the TD direction, and the film as freshly heat-treated were measured for their crystallinity.

Each film prepared as a measurement object was immediately cut into 2 cm by 2cm square pieces. The square pieces were stacked to a thickness of 200 to 500 µm and the stack was fixed on a glass holder.

This glass holder was secured to a sample clip located beside a characteristic X-ray Cu-Ku light source in an XRD device (Pint 2500 manufactured by Rigaku Corporation), by which XRD measurement was performed at a scan speed of 0.02 to 0.5°/min over the range of 5 to 40°.

The XRD pattern obtained by this measurement was zero-point-corrected at both ends, and the area (integrated intensity) of the zero-point-corrected pattern was defined as Ia + Ic (area of halo attributed to amorphous portion + area of peak attributed to crystalline portion). The halo attributed to the amorphous portion was eliminated from the zero-point-corrected pattern (in such a way as to maintain the symmetry of scattering peak intensity), and the area of the resulting pattern was defined as Ic. The crystallinity was calculated by the formula Ia/(Ia + Ic) × 100.

### (Method for Measuring Tensile Strength at Break)

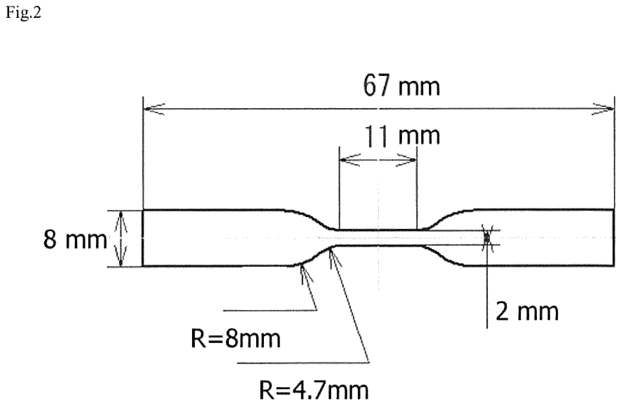

The tensile strength at break of the stretched film was measured as follows: the stretched film was cut to prepare a test specimen shaped as shown in FIG. 2 (test specimen as specified in the former JIS K 7113-2 (1/3)), a tensile test of the test specimen according to JIS K 7127 was performed using a tensile tester (EZ-LX 1 kN manufactured by Shimadzu Corporation) at a tensile speed of 100 mm/min in the stretch direction of the stretched film, and the stress at which the test specimen broke (tensile strength at break) was determined.

### [Production of Resin Pellets P-1]

Seventy parts by weight of poly(3-hydroxybutyrate) resin A-1 was dry-blended with 30 parts by weight of polybutylene adipate terephthalate B-1, 0.5 parts by weight of behenamide as a lubricant (BNT-22H manufactured by Nippon Fine Chemical Co., Ltd.) and 0.5 parts by weight of pentaerythritol as a nucleating agent. The resulting resin material was placed into a 26-mm-diameter corotating twin-screw extruder whose cylinder temperature and die temperature were set to 150°C, and the resin material was extruded into a strand, which was solidified by passing it through a water bath filled with 45°C hot water. The solidified strand was cut by a pelletizer to obtain resin pellets P-1.

### [Production of Resin Pellets P-2]

Resin pellets P-2 were obtained in the same manner as the resin pellets P-1, except that 90 parts by weight of poly(3 -hydroxybutyi-ate) resin A-1 and 10 parts by weight of polybutylene adipate terephthalate B-1 were used.

### <Example 1>

A 40-mm-diameter single-screw extruder was used to which a 350-mm-wide T-die was coupled. The cylinder temperature and the die temperature of the single-screw extruder were set to 165°C.

The resin pellets P-1 were placed into and melted in the single-screw extruder, and the molten resin with a temperature of 165°C was extruded into a film through the T-die. The film of the molten resin was extruded onto a cast roll set to 20°C and molded into a given shape. After being cooled to a film temperature of 20°C, the film was separated from the cast roll.

The separated film was taken up on a take-up roll, and the film was then continuously stretched by a roll longitudinal stretching machine in such a manner that the film temperature during the stretching was 20°C and the stretch ratio in the longitudinal (MD) direction was 6. The film temperature was controlled by adjusting the roll temperature of the longitudinal stretching machine to the above temperature (20°C).

Subsequently, the film was continuously stretched by a transverse stretching machine (clip tenter) in such a manner that the film temperature during the stretching was 25°C and the stretch ratio in the width (TD) direction was 6. The film temperature was controlled by applying an air stream of the above temperature (25°C) to the film in the transverse stretching machine.

Subsequently, the film was heat-treated in the transverse stretching machine (clip tenter) in such a manner that the film temperature reached 90°C. The film temperature was controlled by applying an air stream of the above temperature (90°C) to the film.

In the above process, the crystallinity of the film as separated from the cast roll was 30%, the crystallinity of the film as stretched in the MD direction was 42%, the crystallinity of the film as stretched in the TD direction was 45%, and the crystallinity of the film as heat-treated was 54%.

The width ends of the heat-treated film were cut off, and thus a biaxially-stretched film with a width of 1000 mm and a thickness of 20 µm was obtained. Throughout the above process, the film was continuously transferred.

The tensile strength at break of the finally obtained film was 87 MPa in the MD direction and 118 MPa in the TD direction.

### <Example 2>

A biaxially-stretched film was obtained in the same manner as in Example 1, except that the resin pellets P-2 were used instead of the resin pellets P-1 and that the film temperature during heat treatment was changed to 140°C.

In this Example, the crystallinity of the film as separated from the cast roll was 39%, the crystallinity of the film as stretched in the MD direction was 42%, the crystallinity of the film as stretched in the TD direction was 43%, and the crystallinity of the film as heat-treated was 74%.

The tensile strength at break of the finally obtained film was 75 MPa in the MD direction and 122 MPa in the TD direction.

### <Comparative Example 1>

Production of a stretched film was attempted in the same manner as in Example 1, except that the film temperature reached by cooling on the cast roll was changed to 65°C.

The film broke when being stretched in the MD direction, and a stretched film was not able to be produced.

In this <Comparative Example, the crystallinity of the film as separated from the cast roll was 53%.

### <Comparative Example 2>

Production of a stretched film was attempted in the same manner as in Example 2, except that the film temperature during stretching in the MD direction was changed to 80°C.

The film broke when being stretched in the MD direction, and a stretched film was not able to be produced.

In this <Comparative Example, the crystallinity of the film as separated from the cast roll was 39% and the crystallinity of the film as stretched in the MD direction was 58%.

### Reference Signs List

- 11: extruder
- 12: cast roll
- 13, 13': stretching roll
- 14: transverse stretching machine
- 15: winding roll
- 21: molten film raw material
- 22: film

## Claims

1. A method for producing a stretched film containing a poly(3-hydroxybutyrate) resin, the method comprising the steps of:
(i) melting a film raw material containing the poly(3-hydroxybutyrate) resin and another resin with a glass transition temperature lower than 0°C and extruding the molten film raw material onto a cast roll to mold a film;
(ii) separating the film molded in the step (i) from the cast roll under conditions where the film has a temperature of 0 to 60°C; and
(iii-a) stretching the film obtained in the step (ii) in an MD direction under conditions where the film has a temperature of 10 to 75°C, wherein
the stretched film contains 1 to 100 parts by weight of the other resin per 100 parts by weight of the poly(3-hydroxybutyrate) resin.

2. The method according to claim 1, further comprising the step of:
(iii-b) stretching the film obtained in the step (iii-a) in a TD direction under conditions where the film has a temperature of 10 to 80°C.

3. The method according to claim 1 or 2, further comprising the step of:
(iv) heating the film obtained in the step (iii-a) or (iii-b) to a temperature that is 10°C or more above the temperature of the film during the step (iii-a) or (iii-b) and that is 70°C or higher.

4. The method according to claim 1 or 2, wherein the film molded in the step (i) has a temperature that is more than 1 0°C above a glass transition temperature of the poly(3-hydroxybutyrate) resin.

5. The method according to claim 1 or 2, wherein a stretch ratio in the step (iii-a) and/or the step (iii-b) is from 2 to 8.

6. The method according to claim 1 or 2, wherein the film is continuously transferred throughout the steps from the step (i) to a final step.

7. The method according to claim 1 or 2, wherein in the step (iii-a), the stretching in the MD direction is performed by using a plurality of rolls on which the film is transferred and by operating the plurality of rolls at different rotational speeds.

8. The method according to claim 1 or 2, wherein the poly(3-hydroxybutyrate) resin comprises poly(3-hydroxybutyrate-co-3-hydroxyhexanoate).

9. The method according to claim 1 or 2, wherein the other resin comprises an aliphatic polyester resin and/or an aliphatic-aromatic polyester resin.

10. The method according to claim 9, wherein the other resin comprises at least one selected from the group consisting of polybutylene succinate adipate, polybutylene succinate, polycaprolactone, polybutylene adipate terephthalate, polybutylene sebacate terephthalate, and polybutylene azelate terephthalate.

11. A stretched film comprising:
100 parts by weight of a poly(3-hydroxybutyrate) resin; and
1 to 100 parts by weight of another resin with a glass transition temperature lower than 0°C,
the stretched film having a tensile strength at break of 50 MPa or more in an MD direction and/or a TD direction.

12. The stretched film according to claim 11, having a thickness of 10 to 200 µm.

13. The stretched film according to claim 11 or 12, wherein the poly(3-hydroxybutyrate) resin comprises poly(3-hydroxybutyrate-co-3-hydroxyhexanoate).

14. The stretched film according to claim 11 or 12, wherein the other resin comprises an aliphatic polyester resin and/or an aliphatic-aromatic polyester resin.

15. The stretched film according to claim 14, wherein the other resin comprises at least one selected from the group consisting of polybutylene succinate adipate, polybutylene succinate, polycaprolactone, polybutylene adipate terephthalate, polybutylene sebacate terephthalate, and polybutylene azelate terephthalate.

16. The stretched film according to claim 11 or 12, being a strip-shaped film wound in a roll.
